# EUROPEAN PATENT APPLICATION

(11) **EP 3 972 202 A1**
(43) Date of publication of application: **23.03.2022**
(21) Application number: 19928358.1
(22) Date of filing: 16.05.2019
(51) Int. Cl.: H04L 12/28

(54) **SMART HOME SYSTEM CONTROL METHOD AND APPARATUS, ELECTRONIC DEVICE AND STORAGE MEDIUM**

(71) Applicant: SHENZHEN HEYTAP TECHNOLOGY CORP., LTD., Shenzhen, Guangdong 518057 (CN); GUANGDONG OPPO MOBILE TELECOMMUNICATIONS CORP., LTD., Dongguan, Guangdong 523860 (CN)
(72) Inventor: HUANG, Cheng, Dongguan, Guangdong 523860 (CN)
(74) Representative: Rossi, Ugo
(86) International application number: PCT/CN2019/087311
(87) International publication number: WO 2020/228040

(57) **Abstract**

A smart home system control method and apparatus, an electronic device and a storage medium. Said method comprises: acquiring device information of a smart device waiting to be added to a smart scene (S110); acquiring, according to the device information, a previous device needing to be replaced and a smart scene including the previous device (S120); and in the smart scene including the previous device, configuring the smart device into the smart scene, and removing the previous device from the smart scene (S130). By acquiring device information of a smart device to be added, the smart home system control method and apparatus, the electronic device and the storage medium can determine on their own the smart device to be replaced; configure, into a smart scene of the smart device to be replaced, the smart device to be added; and delete the smart device to be replaced, thereby achieving a quick configuration effect and improving the configuration efficiency.

## Description

### TECHNICAL FIELD

The present disclosure relates to the technical field of smart home, and particularly to a method, an apparatus, an electronic device and a storage medium for controlling a smart home system.

### BACKGROUND

With the popularity of smart devices, a smart home system can set smart scenes. A user only needs to start the smart scene to automatically control the smart devices (such as a smart lighting device, a smart air conditioner, a refrigerator, etc.) added in the smart scene as predetermined. However, it is inconvenient to control the smart device in the current smart home system, which needs to be improved.

### SUMMARY

The object of the disclosure is to provide a method, an apparatus, an electronic device and a storage medium for controlling a smart home system, so as to improve the efficiency of the network configuration and enhance the user experience.

In a first aspect, an embodiment of the disclosure provides a method for controlling a smart home system. Device information of a smart device waiting to be added in a smart scene is acquired. According to the device information, a previous device required to be replaced and at least one smart scene in which the previous device has been added is acquired. The smart device is configured in the at least one smart scene and the previous device is removed from the at least one smart scene.

In a second aspect, an embodiment of the disclosure provides an apparatus for controlling a smart home system. The apparatus includes a first acquiring module, a second acquiring module, and a performing module. The first acquiring module is configured to acquire device information of a smart device waiting to be added in a smart scene. The second acquiring module is configured to acquire a previous device required to be replaced and at least one smart scene in which the previous device has been added. The performing module is configured to configure the smart device in the at least one smart scene and removing the previous device from the at least one smart scene.

In a third aspect, an embodiment of the disclosure provides an electronic device. The electronic device includes a memory and a processor. The memory is coupled to the processor. The memory stores instructions which, when being executed by the processor, cause the processor to implement the steps: acquiring device information of a smart device waiting to be added in a smart scene; acquiring, according to the device information, a previous device required to be replaced and at least one smart scene in which the previous device has been added; and configuring the smart device in the at least one smart scene and removing the previous device from the at least one smart scene.

In a fourth aspect, an embodiment of the disclosure provides a computer readable storage medium. The computer readable storage medium stores program codes therein, and the program codes are configured to perform the above-mentioned method when being executed by a processor.

The disclosure provides the method, the apparatus, the electronic device and the storage medium for controlling a smart home system. By acquiring device information of the smart device waiting to be added, the smart device required to be replaced is determined consequently, the smart device waiting to be added is configured in the at least one smart scene in which the smart device required to be replaced has been added, and the smart device required to be replaced is removed from the at least one smart scene, which achieves an effect of quick configuration and improves configuration efficiency.

These aspects or other aspects of the disclosure will be more concise and understandable in the description of the following embodiments.

### BRIEF DESCRIPTION OF THE DRAWINGS

In order to explain the technical solutions of the disclosure more clearly, drawings that need to be used in the embodiments will be briefly introduced in the following. Obviously, the drawings in the following illustrate only some embodiments of the disclosure; and based on these drawings, those skilled in the art can also obtain other drawings without paying any inventive work.
FIG. 1 is a schematic structural diagram illustrating an Internet of Things according to an embodiment of the disclosure;
FIG. 2 is a schematic structural diagram illustrating another Internet of Things according to an embodiment of the disclosure;
FIG. 3 is a schematic structural diagram illustrating still another Internet of Things according to an embodiment of the disclosure;
FIG. 4 is a schematic diagram illustrating an engine architecture of a quick app according to an embodiment of the disclosure;
FIG. 5 is a schematic diagram illustrating a client-server communication mode according to an embodiment of the disclosure;
FIG. 6 is a schematic diagram illustrating an operation environment of a data processing method according to an embodiment of the disclosure;
FIG. 7 is a schematic flowchart illustrating a method for controlling a smart home system according to an embodiment of the disclosure;
FIG. 8 is a schematic flowchart illustrating a method for controlling a smart home system according to another embodiment of the disclosure;
FIG. 9 is an interface diagram of a display interface for a replacement confirmation information in a method for controlling a smart home system according to an embodiment of the disclosure;
FIG. 10 is a schematic flowchart illustrating a method for controlling a smart home system according to still another embodiment of the disclosure;
FIG. 11 is an interface diagram of a device addition interface in a method for controlling a smart home system according to an embodiment of the disclosure;
FIG. 12 is an interface diagram of another display interface for a replacement confirmation information in a method for controlling a smart home system according to an embodiment of the disclosure;
FIG. 13 is an interface diagram of a detection interface in a method for controlling a smart home system according to an embodiment of the disclosure;
FIG. 14 is a schematic flowchart illustrating a method for controlling a smart home system according to still another embodiment of the disclosure;
FIG. 15 is an interface diagram of a display interface for a prompt message in a method for controlling a smart home system according to an embodiment of the disclosure;
FIG. 16 is a block diagram illustrating an apparatus for controlling a smart home system according to an embodiment of the disclosure;
FIG. 17 is a block diagram illustrating a first acquiring module according to an embodiment of the disclosure;
FIG. 18 is a block diagram illustrating a second acquiring module according to an embodiment of the disclosure;
FIG. 19 is another block diagram illustrating a second acquiring module according to an embodiment of the disclosure;
FIG. 20 is still another block diagram illustrating a second acquiring module according to an embodiment of the disclosure;
FIG. 21 is a block diagram illustrating a performing module according to an embodiment of the disclosure;
FIG. 22 is a block diagram illustrating an electronic device according to a fifth embodiment of the disclosure; and
FIG. 23 is a block diagram illustrating a storage medium according to a sixth embodiment of the disclosure.

### DETAILED DESCRIPTION OF PREFERRED EMBODIMENTS

The technical solutions in the embodiments of the disclosure will be clearly and completely described below in conjunction with the drawings in the embodiments of the present disclosure. Obviously, the described embodiments are only a part rather than all of the embodiments of the present disclosure. All other embodiments, which are obtained by those of ordinary skill in the art based on the embodiments in this disclosure without paying any creative work, shall fall within the scope of this disclosure.

The Internet of Things (IoT) is a network concept based on "concepts of Internet", and a user side thereof spreads and extends between any objects to exchange information and communicate. With the development of IoT technology, a IoT system can configure some scenes therein. Multiple controlled devices can be involved in the configured scenes, and the multiple controlled devices have a certain linkage relationship therein and are capable to work cooperatively.

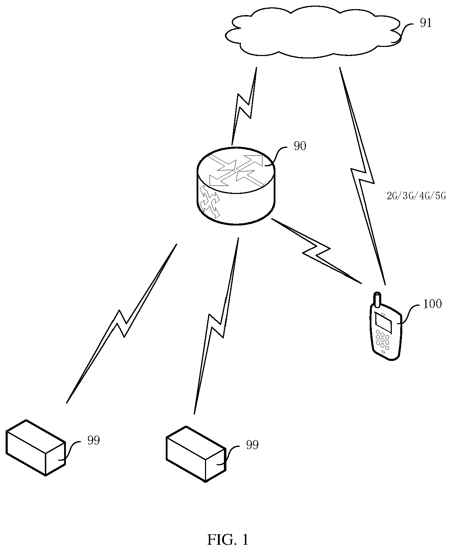

The controlled devices may be mobile terminals such as projectors, projection screens, smart lights, smart sockets, motion sensors, door and window sensors, wireless switches, air conditioning companions, smoke alarms, smart curtain motors, and air purifiers, smart speakers, etc. In an implementation shown in FIG. 1, a mobile terminal 100, which plays role in controlling, can realize data interaction with controlled devices 99 by establishing a direct wireless connection with a router 90. Furthermore, a mobile terminal 100 can establish a connection with a cloud 91, and then achieves data interaction with the controlled devices 99 through a data link between the cloud 91 and the router 90.

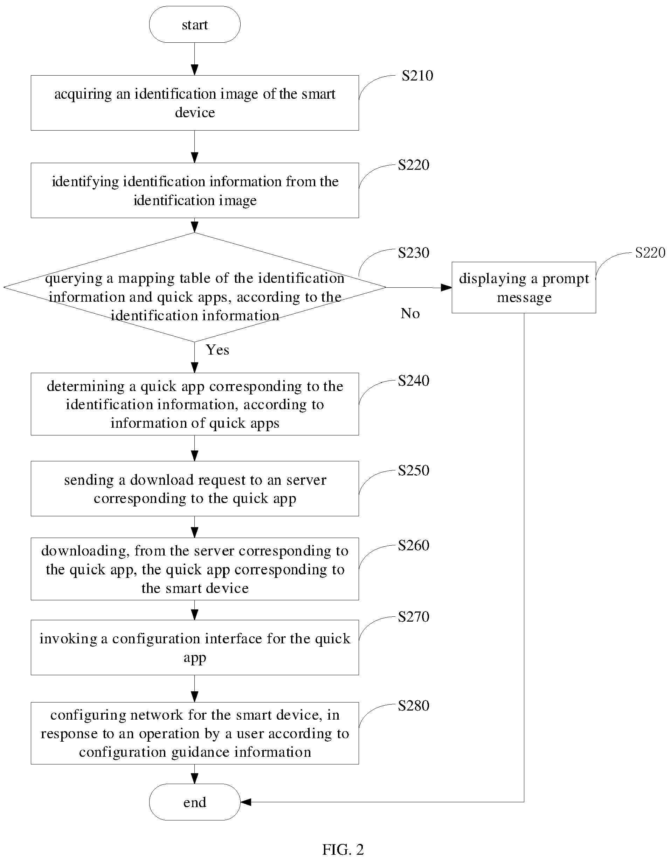

In another implementation shown in FIG. 2, a mobile terminal 100 establishes direct data interaction with a first cloud 91a, and then data interaction between the mobile terminal 100 and a second could 91b is realized based on data interaction between the first could 91a and the second could 91b. Then the mobile terminal 100 realizes data interaction with controlled devices 99 in a case where the second cloud 91b can interact data with the controlled devices 99.

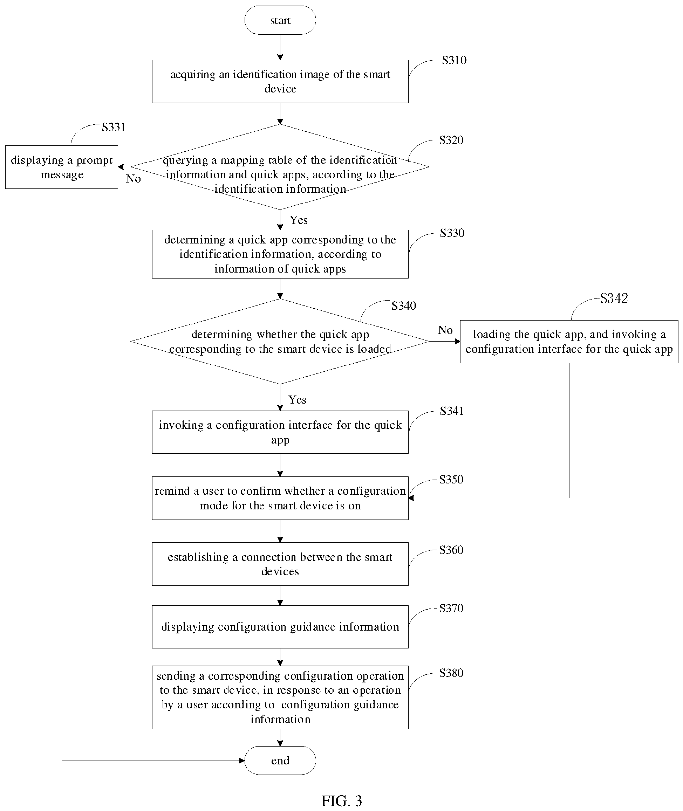

In still another implementation shown in FIG. 3, controlled devices 99 can establish a wireless connection with a router 90 though a gateway 98. Data interaction can include that a mobile terminal sends a control command to a controlled device, and the controlled device returns status information or a command execution result to the mobile terminal, etc. The data interaction between the mobile terminal and the controlled devices can be triggered by a client installed in the mobile terminal.

With the popularity of the quick app, developers of mobile terminal expect that using the quick app to achieve the same functions as the above client, so as to improve efficiency of developing smart home functions and save storage space on mobile terminals.

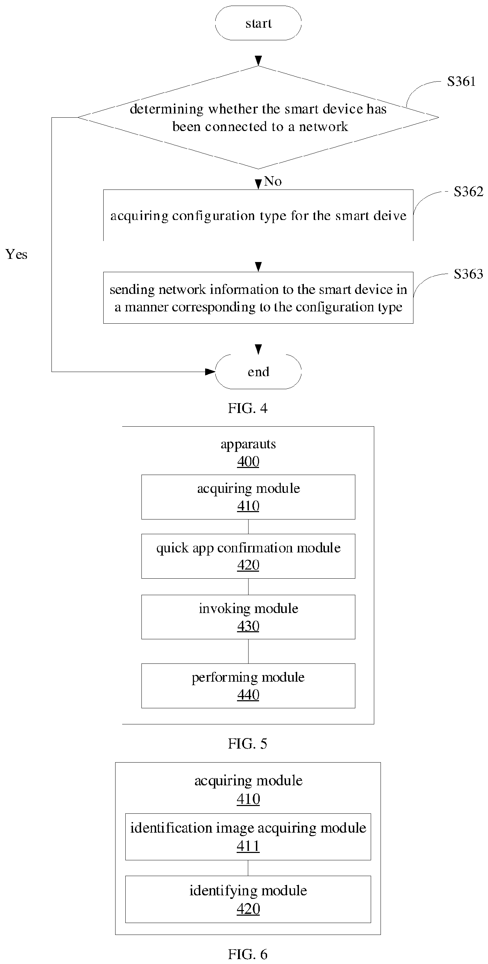

The quick app is a new form of applications based on a hardware platform of the mobile terminals, and the quick app does not require installation, can be used with a click, and brings native app experience (such as performance, system integration, interaction, etc.). FIG. 4 illustrates a schematic diagram illustrating an engine architecture of a quick app. A front-end design of the quick app learns from and integrates design ideas of mainstream front-end frameworks (such as Vue, React, etc.), namely building applications in a componentized manner, taking a Model-View-View Model (MVVM) design pattern with data binding as the core, improving performance by Virtual DOM (V-DOM), and choosing a concise and clear Vue-like template.

In order to facilitate data interaction, various vendors develop its own SDK plug-in for being invoked from the client in the mobile terminal. When the client loads a vendor's SDK plug-in, the client can invoke the loaded SDK plug-in and then interact with a server of the vendor through the SDK plug-in. For example, as shown in Figure 5, a client 110 loads a vendor A's SDK plug-in 111 and a vendor B's SDK plug-in 112, and the client 110 can interact with the vendor A's server 210 by invoking the vendor A's SDK plug-in, and the client 110 can interact data with the vendor B's server 220 by invoking the vendor B's SDK plug-in.

For a smart home system, the user usually configures one or more smart scenes to centralized control on one or more smart devices in the smart scenes. For example, a smart scene for rest contains instructions such as turning off smart lights, closing windows, turning off a TV, turning off an audio, etc. When the user activates the smart scene for rest, the smart home system automatically performs the above operations. Some smart devices may be configured in multiple smart scenes, and once a smart device fails and needs to be replaced with a new smart device, the failed smart device in the multiple smart scenes needs to be replaced with the new smart device to maintain the previous multiple smart scenes, which is extremely inconvenient to operate. Therefore, the inventor proposes a method, an apparatus, an electronic device and a storage medium for controlling a smart home system. An application environment in which embodiments of the disclosure may be applied will be described below with reference to a drawing.

In some implementations, a mobile terminal 100 illustrated in FIG. 6 runs a quick app and a client 110. The quick app is run on a quick app engine, which sets an extension interface 97 provided by the client. The client 110 sets an extension interface 96 thereon for communicating with the extension interface 97. The client 110 can invoke SDK plug-ins of various vendors though the extension interfaces. For example, a vendor A's SDK plug-in 111, a vendor B's SDK plug-in 112, and a vendor C's SDK plug-in 113 illustrated in FIG. 6, can be invoked. In this case, data processing instructions triggered in the quick app can be transmitted to the extension interface 96 on the client through the extension interface 97 set on the quick app engine, and then the data processing instructions can be transmitted to the SDK plug-ins of various vendors.

The embodiments will be described below in conjunction with the drawings.

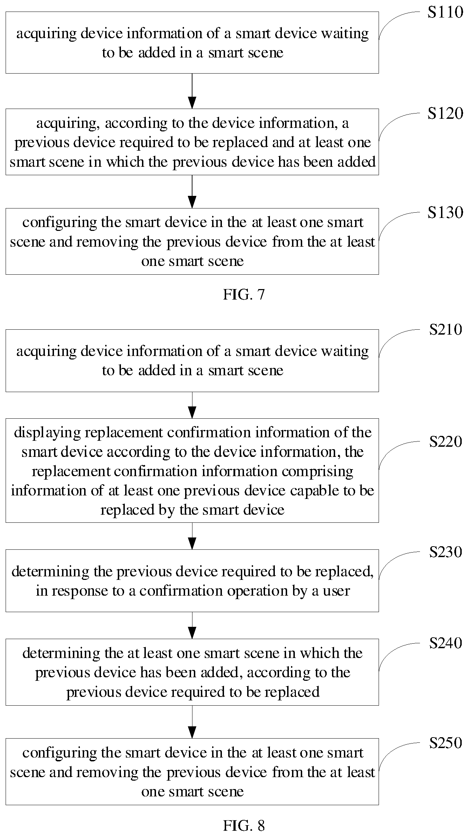

Referring to FIG. 7, a method for controlling a smart home system is provided according to an embodiment of the disclosure. The method includes the following steps:

Step S110: device information of a smart device waiting to be added in a smart scene is acquired.

The smart scene refers to a predetermined or customized smart mode applied to various scenes, and one or more smart devise can be configured in the smart scene. It can be understood that a smart home system can configure one or more smart scenes, a same smart device may be configured in only one smart scene or be simultaneously configured in multiple smart scenes. The smart device waiting to be added in a smart scene refers to a smart device which has not been added in the smart scene or a new smart device which is newly configured in a network. The device information may include type information and/or model information of the smart device, etc.

In some implementations, identification information of the smart device waiting to be added in the smart scene is acquired, and the device information of the smart device is identified from the identification information. For example, by reading an image of a nameplate of the smart device, the device information of the smart device can be identified from the image. The device information of the smart device may also be acquired from device information input by a user. In some implementations, a QR code or a barcode is set on some of the smart devices, and the device information of the smart device can be acquired by identifying the QR code or the barcode. In some implementations, the device information of a smart device waiting to be added in a smart scene may be acquired by the following steps: a quick app corresponding to the smart device is invoked, and then a query request is sent to a server corresponding to the quick app, a message from the server is received, and the device information of the smart device is acquired. The quick app corresponding to the smart device can be determined by identifying a QR code or a barcode on a body of the smart device. Various quick apps of different vendors can be prestored locally or acquired by downloading from the server.

Before replacing a previous device added in the smart scene, the user is required to perform a network configuration operation for the smart device waiting to be added in the smart scene. It can be understood that the network configuration refers to adding, by a user, a new smart device in the smart home system at the first use, and various information of the smart device can be acquired during this process. Therefore, in some implementations, before invoking the quick app corresponding to the smart device, a network may be configured for the smart device waiting to be added in the smart scene, in response to a network configuration operation for the smart device waiting to be added in the smart scene by the user. The quick app corresponding to the smart device can be acquired during the network configuration. It should be understood that the quick app corresponding to the smart device can be prestored locally or acquired by downloading from the vendor server corresponding to the smart device to acquire. When the network configuration operation is completed, the quick app corresponding to the smart device can be invoked to send the query request to the server corresponding to the quick app, and the device information of the smart device is acquired

Step S120: according to the device information, a previous device required to be replaced and at least one smart scene in which the previous device has been added are acquired.

The previous device required to be replaced refers to a device, which is required to be replaced with the smart device waiting to be added in the smart scene, and the previous device has been configured in one or more smart scenes. According to the device information, the previous device required to be replaced can be acquired by setting a replacement list in the smart scene; adding at least one smart device required to be replaced to the replacement list; when the smart device waiting to be added in the smart scene is acquired, determining whether a device type and a device model of the smart device waiting to be added in the smart scene is respectively the same as one of the at least one smart device in the replacement list; and when it is the same, determining such smart device in the replacement list as the previous device required to be replaced. It is also possible for a user to manually identify a device configured in the smart scene according to the device information, and the identified device is determined as the previous device required to be replaced. It is still possible to search a smart device which matches with the smart device waiting to be added in the smart scene according to the device information, and the searched smart device is determined as the previous device required to be replaced.

In some implementations, since the previous device required to be replaced is usually failed or under an old condition, the previous device required to be replaced is acquired as following. Firstly, a list including one or more failed devices is acquired; the list is queried according to the device information, and one of the failed devices in the device list matching the device information of the smart device is determined as the previous device capable to be replaced. The system automatically determines whether a smart device is failed according to an operating state of the smart device, and the smart device is added to the list when the smart device is failed. The user can manually add a failed or old smart device to the list. By directly querying the list according to the device information, time and effort to determine the previous device required to be replaced can be significantly reduced, and a system resource is saved.

It can be understood that, in some implementations, the previous device required to be replaced can be one device or multiple devices. When multiple smart devices required to be replaced are determined according to a predetermined rule, the multiple smart devices can be determined as previous devices required to be replaced.

When determining the previous device required to be replaced, the at least one smart scene in which the previous device has been added are also determined. The at least one smart scene in which the previous device has been added means that the previous device has been configured in the at least one smart scene. It can be understood that determining the at least one smart scene in which the previous device has been added may be determining all smart scene in which the previous device has been added, or determining some of smart scenes in which the previous device has been added. Specific determination manners may be customized by a user or predetermined by the system.

In some implementations, when acquiring the at least one smart scene in which the previous device has been added, a control relationship of the previous device in the at least one smart scene may be acquired. The control relationship refers to switching on/ off the previous device, various preset parameter values of the previous device, performing conditions, etc. Acquiring the control relationship of the previous device is convenient to set the control relationship of the smart device waiting to be added in the configuration.

Step S130: the smart device is configured in the at least one smart scene and the previous device is removed from the at least one smart scene.

According to the determined previous device required to be replaced and the determined at least one smart scene in which the previous device has been added, the smart device waiting to be added in the smart scene is configured in the determined at least one smart scene and the previous device is removed from the determined at least one smart scene. When the smart device waiting to be added in the smart scene is configured in the at least one smart scene, a control relationship of the smart device remains consistent with the control relationship of the previous device. For example, the smart device and the previous device are both air conditioners, and in this smart scene, a control of the previous device is to turning on the air conditioner and adjusting temperature to 25°C. When the smart device is configured in this smart scene, a control of the smart device is likewise to turning on the air conditioner and adjusting temperature to 25°C. That is, when configuring the smart device, the control relationship of the smart device remains consistent with the control relationship of the previous device.

It can be understood that one or more smart scene required to be replaced may be determined. When there are multiple smart scenes required to be replaced, the previous device is removed from the multiple smart scenes sequentially or simultaneously, and the smart device waiting to be added is configured in the multiple smart scenes. In the configuration, other settings of the smart scene can remain unchanged or be modified accordingly as needed. For example, a name of the smart scene may be unchanged or changed, and similarly, other setting parameters in the smart scene may be unchanged or modified accordingly.

After removing the previous device from the at least one smart scene, and configuring the smart device waiting to be add in the at least one smart scene, a replacement between the smart device and the previous device has been completed. It avoids the trouble that a user is required to perform manual operation for replacing the smart device, and at the same time, when there are more smart scenes required to be replaced, a quick replacement can be achieved, which significantly improve the replacement efficiency.

Referring to FIG. 8, a method for controlling a smart home system is provided according to another embodiment of the disclosure. The method includes the following steps:

Step S210: device information of a smart device waiting to be added in a smart scene is acquired.

Step S220: replacement confirmation information of the smart device is displayed according to the device information, and the replacement confirmation information includes information of at least one previous device capable to be replaced by the smart device.

In some implementations, there may be several previous devices capable to be replaced with the smart device waiting to be added in the smart scene. For example, a smart home system includes multiple smart lights, and the smart lights can be taken as the previous devices capable to be replaced, when the device information of the smart device waiting to be added in the smart scene is detected as a smart light. At the same time, the replacement confirmation information of smart device waiting to be added in the smart scene is displayed to the user for selection.

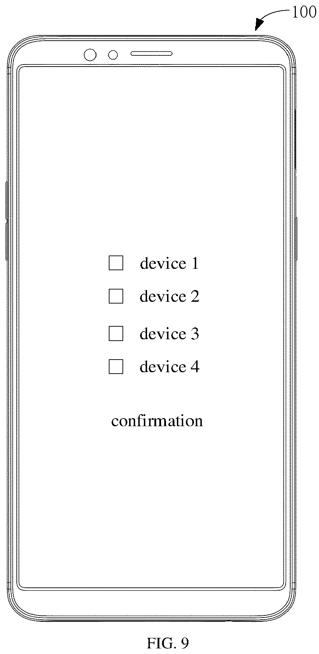

It can be understood that the replacement confirmation information may include information of the at least one previous device capable to be replaced by the smart device. The information of the at least one previous device, which may include a device model, a device type, a device installation position, a device rated power, etc., is provided to a user for determining the pervious device. There are multiple modes for displaying the replacement confirmation information of the smart device. FIG. 9 illustrate a display mode for the replacement confirmation information of the smart device. A user can select on the replacement confirmation information of the smart device and finally determine the previous device required to be replaced.

Step 230: the previous device required to be replaced is determined, in response to a confirmation operation by a user.

In some implementations, the user can make a selection on the displayed replacement confirmation information of the smart device, and perform the confirmation operation after the selection. When the selection by the user has been completed, the previous device required to be replaced is determined, in response to a confirmation operation by the user.

Step S240: the at least one smart scene in which the previous device has been added is determined, according to the previous device required to be replaced.

Step S250: the smart device is configured in the at least one smart scene and the previous device is removed from the at least one smart scene.

By displaying replacement confirmation information of the smart device, the user can more precisely control the replacement process of the smart device. During updating devices in the smart home system, avoiding a complete removal of all the previous devices simultaneously can adapt to more application scenes.

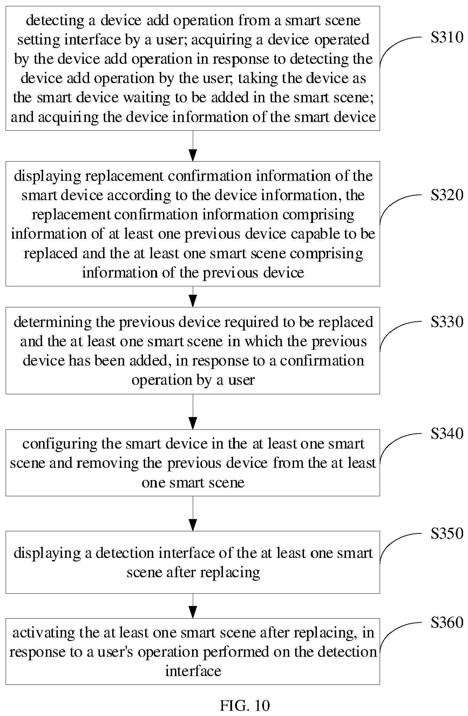

Referring to FIG. 10, a method for controlling a smart home system is provided according to another embodiment of the disclosure. The method includes the following steps:

Step S310: a device add operation from a smart scene setting interface by a user is detected; a device operated by the device add operation is acquired in response to detecting the device add operation by the user; the device is taken as the smart device waiting to be added in the smart scene; and the device information of the smart device is acquired.

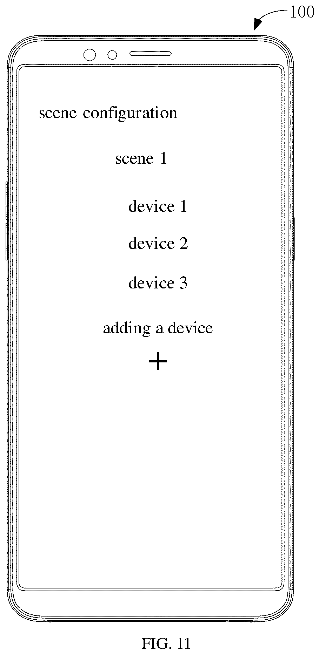

The smart scene setting interface refers to an interface used for configuring a smart scene. For example, FIG. 11 illustrates an interface diagram of a smart scene setting interface. The user can perform multiple operations on the interface, such as adding smart devices, removing smart devices, setting control relationship of smart devices, etc.

When the user needs to replace a smart device in the smart home system, a device add operation for a new smart device is required to be performed on the smart scene setting interface. A device operated by the device add operation is acquired when the system detects the device add operation by the user, and the device is taken as the smart device waiting to be added in the smart scene. Before operations from the smart scene setting interface by the user, the device information of the smart device can be acquired during a process of a network configuration operation for the smart device.

Step S320: replacement confirmation information of the smart device is displayed according to the device information, and the replacement confirmation information includes information of at least one previous device capable to be replaced and the at least one smart scene including information of the previous device.

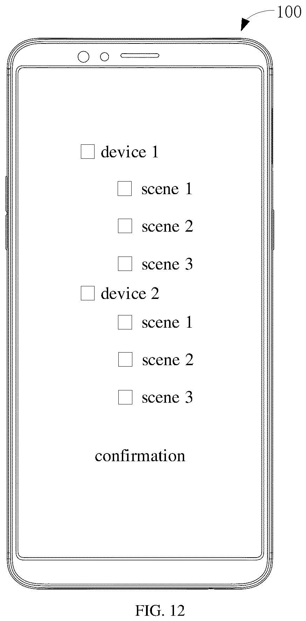

In some implementations, a same smart device may be configured in multiple smart scenes. After acquiring device information of the smart device waiting to be added in the smart scene, the previous device in some of the multiple smart scenes may be replaced as acquired, according to user needs. In this case, the replacement confirmation information may include information of at least one previous device capable to be replaced and the at least one smart scene including information of the previous device. FIG. 12 illustrates a display mode for a replacement confirmation information. By displaying the information of at least one previous device capable to be replaced and the at least one smart scene including information of the previous device to the user, the user can select a previous device required to be replaced and at least one smart scene required to be replaced.

As illustrated in FIG. ^{∗}, three smart scenes correspond to the previous device 1, and two smart scenes correspond to the previous device 2. A user can replace one or two of the three smart scenes corresponding to the previous device 1 as needed. Thus, the user can select the previous device required to be replaced and the at least one smart scene required to be replaced.

It can be understood that, in some implementations, the replacement confirmation information may only include all of the at least one smart scene in which the previous device has been added, which is provided to the user for selection.

Step S330: the previous device required to be replaced and the at least one smart scene in which the previous device has been added are determined, in response to a confirmation operation by a user.

Step S340: the smart device is configured in the at least one smart scene and the previous device is removed from the at least one smart scene. After performing the step S340, step S350 and step S360 can be optionally performed.

S350: a detection interface of the at least one smart scene after replacing is displayed.

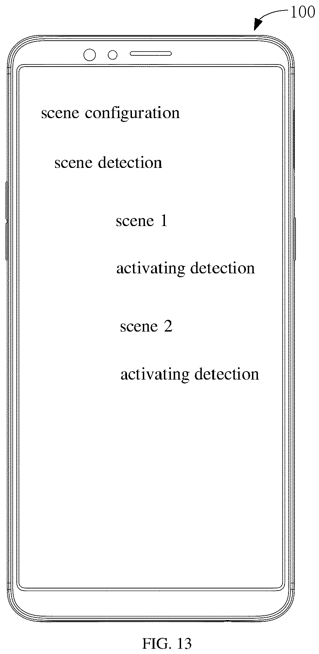

The detection interface may include control information of the determined at least one smart scene required to be replaced for operation by the user. The user may operate on the detection interface to detect the at least one smart scene after replacing and verify whether the at least one smart scene after replacing works properly. For example, FIG. 13 illustrates a schematic diagram of a detection interface. Referring to FIG. 13, the user can activate any one of the at least one smart scene after replacing on the detection interface.

S360: the at least one smart scene after replacing is activated, in response to a user's operation performed on the detection interface.

Activating at least one smart scene after replacing refers to activating the at least one smart scene, and configuring each smart device in the at least one smart scene according to predetermined control parameters in the at least one smart scene.

In some implementations, the user may detect the at least one smart scene after replacing one by one, i.e., activating one smart scene of the at least one smart scene after replacing, and deactivating the smart scene after determining that the smart scene works properly; and activating a next smart scene. In some implementations, the user may activate all the at least one smart scene after replacing simultaneously, and the system detects smart scene required to be detected in sequence, according to a preset rule. When a result is detected as proper or improper, a prompt message about the detection result is sent to the user for informing the user of the detection result. It can be understood that the prompt message can be issued in various forms, such as text, image, audio, photoelectric signal, etc.

Through step S350 and step S360, the user can detect the at least one smart scene after replacing and acquiring feedback on whether the replacement is completed properly, which improves the user experience. Once the feedback reflects an improper replacement, a correction can be timely made to avoid a problem of improper smart scenes in use.

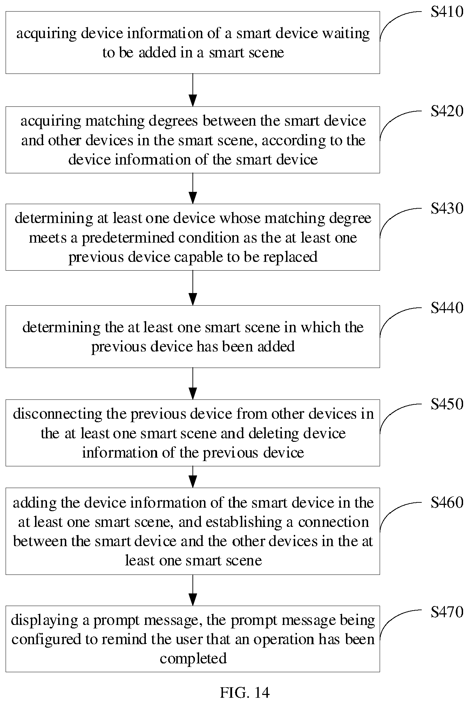

Referring to FIG. 14, a method for controlling a smart home system is provided according to another embodiment of the disclosure. The method includes the following steps:

Step S410: device information of a smart device waiting to be added in a smart scene is acquired.

Step S420: matching degrees between the smart device and other devices in the smart scene are acquired, according to the device information of the smart device.

The matching degrees refers to degrees of similarity between the smart device waiting to be added in the smart scene and each of the devices configured in the smart scenes. The degree of similarity is determined by device model, device type, information of various parameters, etc. For example, the matching degree includes four indicators, such as device model, device type, device vendor and device rated power, etc. When comparing the smart device waiting to be added to the smart scene with the smart device configured in the smart scenes, and determining three of the four indicators of matching degrees are the same, the matching degree can be recorded as 75%. It can be understood that the matching degree can also be set according to other rules.

Step S430: at least one device whose matching degree meets a predetermined condition is determined as at least one previous device capable to be replaced.

In some implementations, the matching degree is determined as meeting the predetermined condition, when at least part of device information of one of the other devices in the smart scene is the same as at least part of the device information of the smart device.

In some implementations, matching degrees between the smart device waiting to be added in the smart scene and each of the smart devices in the smart scene are acquired simultaneously, and the matching degrees are ranked to determine the previous device required to be replaced. It can be understood that, in some implementations, according to a device type of the smart device, one or more smart device with the same device type as the device type of the smart device is determine, and then the matching degrees between the determined one or more smart device and the smart device is determined. Thus, data size for computing the matching degrees can be reduced, and system resource is saved and efficiency is increased.

In some implementations, in a case where the number of smart devices is relatively small, the matching degree is determined as meeting the predetermined condition when a device type of one of the other devices in the smart scene is the same as a device type of the smart device. Because the number of the smart devices is relatively small, there may be only one smart device with the same type, and it can be determined that whether the matching degrees meet the predetermined condition. Thus, the previous device required to be replaced can be determined quickly. The device type refers to the device type of the smart device, which is configured to distinguish types of the smart devices, and the device type is, such as, an air conditioner, a TV, a light, etc.

In some implementations, the matching degree is determined as meeting the predetermined condition when a device type and a device model of one of the other devices in the smart scene is respectively the same as a device type and a device model of the smart device, where the device model refers to a nameplate model for the smart device. Taking air conditioners as an example, a smart home system may include multiple air conditioners. These air conditioners may have various device models, such as a device model 1, a device model 2, etc., and are applied to different usage environments, such as, living rooms and bedrooms in the home, etc. When the device type and the device model of one of the other devices in the smart scene is respectively the same as the device type and the device model of the smart device, it can be very accurately determined whether the smart device waiting to be added to the smart scene is applied to the bedroom or to the living room, and the previous device required to be replaced can be accurately determined.

Step S440: at least one smart scene in which the previous device has been added is determined.

Step S450: the previous device is disconnected from other devices in the at least one smart scene and device information of the previous device is deleted.

A connection between the previous device and the other devices in the at least one smart scene refers to a connection relationship therebetween for controlling. Deleting device information of the previous device refers to deleting the device information of the previous device stored in the at least one smart scene, that is, disconnecting the previous device from the at least one smart scene.

Step S460: the device information of the smart device is added in the at least one smart scene, and a connection between the smart device and the other devices is established in the at least one smart scene.

When the device information of the smart device has been added in the at least one smart scene, information related to the at least one smart scene may be stored locally or uploaded and stored in a server.

It can be understood that, the connection established between the smart device and the other devices in the at least one smart scene is consistent with a connection between the previous device and the other devices in step S450, so as to inherit the connection for the previous device required to be replaced. Step S460 and step S450 may be performed synchronously, or step S460 may also be performed before step S450.

Step S470: a prompt message is displayed, which is configured to remind a user that an operation has been completed.

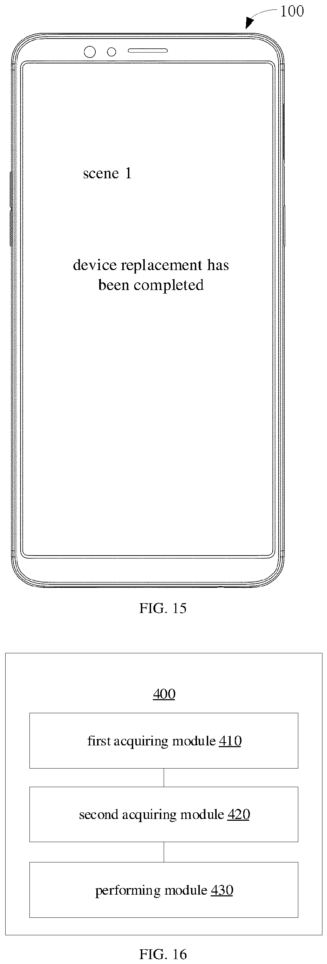

The prompt message is configured to remind the user that a replacement in the at least one smart scene has been completed. It can be understood that, when there are multiple smart scenes required to be replaced, the prompt message can be displayed after completing the replacement in all the smart scenes. In an implementation, when the replacement in one of the at least one smart scene has been completed, replacement completion information for such smart scene is displayed. It can be understood that the prompt message can be displayed in different forms, such as, texts, graphics, images, audios, photoelectric signals, acoustic signals, and the like. For example, FIG. 15 illustrates an interface diagram of a display interface for a prompt message.

In this embodiment, the previous device required to be replaced in the at least one smart scene can be determined, by acquiring matching degrees between the smart device and other devices in the smart scene. Under a condition that there are relatively more smart scenes or devices in the smart scenes, the previous device required to be replaced can be more accurately determined, which avoids occurrence of replacement errors.

Referring to FIG. 16, an apparatus 400 for controlling a smart home system is provided according to an embodiment of the disclosure, which includes a first acquiring module 410, a second acquiring module 420 and a performing module 430.

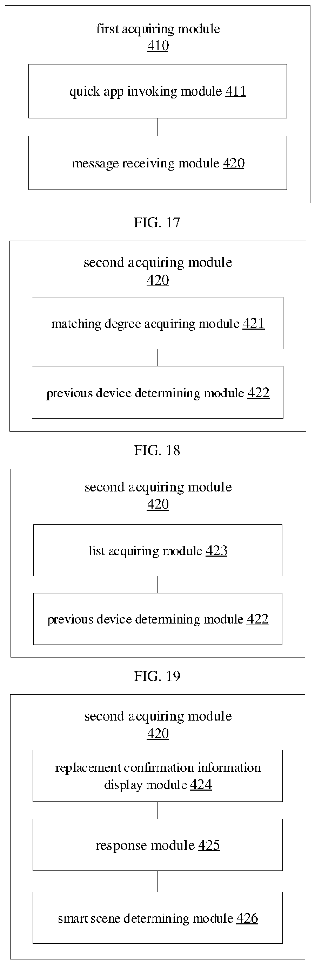

The first acquiring module 410 is configured to acquire device information of a smart device waiting to be added in a smart scene. In some implementations, referring to the FIG. 17, the first acquiring module 410 may include a quick app invoking module 411 and a message receive module 412. The quick app invoking module 411 is configured to invoke a quick app corresponding to the smart device, and send a query request to a server corresponding to the quick app. The message receive module 412 is configured to receive a message from the server, and acquire the device information of the smart device. In some implementations, the first acquiring module 410 is configured to acquire identification information of the smart device waiting to be added in the smart scene, and identify the device information of the smart device from the identification information.

The second acquiring module 420 is configured to acquire a previous device required to be replaced and at least one smart scene in which the previous device has been added, according to the device information. In some implementations, referring to the FIG. 18, the second acquiring module 420 may include a matching degree acquiring module 421 and a previous device determining module 422. The matching degree acquiring module 421 is configured to acquire matching degrees between the smart device and other devices in the smart scene, according to the device information of the smart device. The previous device determining module 422 is configured to determine at least one device whose matching degree meets a predetermined condition as at least one previous device capable to be replaced. In some implementations, referring to the FIG. 19, the second acquiring module 420 may include a device list acquiring module 423 and a list acquiring module 423 and a previous device determining module 422. The list acquiring module 423 is configured to acquire a list including one or more failed device. The previous device determining module 422 is configured to query the list according to the device information, and determine at least one of the failed devices matching the device information of the smart device as the previous device capable to be replaced with the smart device.

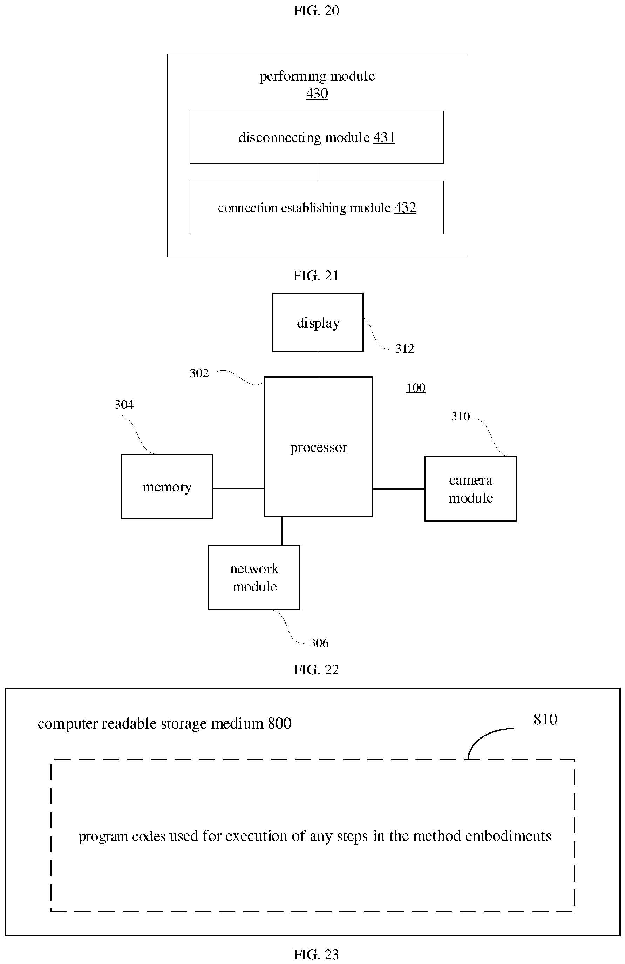

In some implementations, referring to the FIG. 20, the second acquiring module 420 may include a replacement confirmation information display module 424 and a response module 425 and a smart scene determining module 426. The replacement confirmation information display module 424 is configured to display replacement confirmation information of the smart device according to the device information, and the replacement confirmation information includes information of at least one previous device capable to be replaced. In some implements, the replacement confirmation information may further include information of at least one previous device capable to be replaced and the at least one smart scene including information of the previous device. The response module 425 is configured to determine the previous device required to be replaced and the at least one smart scene in which the previous device has been added, in response to a confirmation operation by a user. The smart scene determining module 426 is configured to determine the at least one smart scene in which the previous device has been added, according to the previous device required to be replaced.

The performing module 430 is configured to configure the smart device in the at least one smart scene and remove the previous device from the at least one smart scene. In some implementations, referring to the FIG. 21, the performing module 430 may include a disconnecting module 431 and a connection establishing module 432. The disconnecting module 431 is configured to disconnect the previous device from other devices in the at least one smart scene and deleting device information of the previous device. The connection establishing module 432 is configured to add the device information of the smart device in the at least one smart scene, and establish a connection between the smart device and the other devices in the at least one smart scene.

It should be clear for those skilled in the art that, the description of specific working processes of the apparatus and the modules can be referred to the corresponding processes in the method embodiments, which will not be repeated here again, for simple and concise description.

In the embodiments provided in the disclosure, the coupling, including direct coupling or communication connection, between the modules shown or discussed may be indirect coupling or communication connection by means of some interfaces, devices or modules, which may be electrical, mechanical or other forms.

In addition, various functional modules in the embodiments of the disclosure may be integrated into one processing module, or each of the modules may exist alone physically, or two or more modules may be integrated into one module. The integrated module may be implemented in hardware or software functional modules.

Referring to FIG. 22, based on the method and the apparatus for configuring network for a smart device, a fifth embodiment of the disclosure provides an electronic device 100, which can implement the above method for controlling a smart home system. The electronic device 100 includes one or more (only one is shown in FIG. 22) processors 302 coupled to each other, a memory 304, a network module 306, a camera module 310 and a display 312. The memory 304 stores one or more programs which can be executed to implement the method provided in the above embodiments. The processors 302 can execute the programs stored in the memory 304.

The processor 302 may include one or more processing cores. The processor 302 connects various parts of the electronic device 100 by means of multiple interfaces and lines. The processor 302 perform performs various function and process data by running or executing instructions, programs, code sets, or instruction sets stored in the memory 304 and invoking data stored in the memory 304. In an implementation, the processor 302 may be embodied as at least one of a digital signal processing (DSP), a field-programmable gate array (FPGA), and a programmable logic array (PLA). The processor 302 may integrate a Central Processing Unit (CPU), a Graphics Processing Unit (GPU), a modem, or a combination thereof. The CPU is mainly used to handle the operating system, user interface, applications, etc.; the GPU is used to render and draw the displayed content; and the modem is used to process wireless communication. It is understandable that the modem can also be implemented by a communication chip without being integrated into the processor 302.

The memory 304 may include a Random Access Memory (RAM) or a Read-Only Memory (ROM). The memory 304 may be used to store the instructions, programs, code, code sets, or instruction sets. The memory 304 includes a program storage area and a data storage area. The program storage area may store instructions for implementing the operating system, instructions for implementing at least one function (such as a touch function, a sound playback function, and an image display function), instructions for implementing the multiple embodiments, etc. The data storage area may store data (e.g., a phone book, audio and video data, and chat log data) created during the usage of the electronic device 100.

The network module 306 is configured to receive and send electromagnetic waves, and to realize mutual conversion between the electromagnetic waves and electrical signals, so as to communicate with a communication network or other equipment, such as communication with a wireless access point. The network module 306 may include various existing circuit elements for performing these functions, such as, an antenna, a radio frequency transceiver, a digital signal processor, an encryption/decryption chip, a subscriber identity module (SIM) card, a memory, and the like. The network module 106 may communicate with various networks such as the Internet, an enterprise's Intranet, and a wireless network, or communicate with other equipment through a wireless network. The aforementioned wireless network may include a cellular telephone network, a wireless local area network, or a metropolitan area network.

The camera module 310 can be configured to capture an identification image of the smart device, so that the processor 302 can identify identification information from the identification image.

Referring to FIG. 23, which illustrates a structural block diagram of a computer readable storage medium according to a sixth embodiment of the disclosure. The computer readable storage medium 800 stores program codes therein, and the program codes are configured to perform the method described in the foregoing method embodiments.

The computer readable storage medium 800 may be an electronic memory, such as a flash memory, an electrically erasable programmable read-only memory (EEPROM), an erasable programmable read only memory (EPROM), a hard disk, or ROM. In an implementation, the computer readable storage medium 800 may include a non-transitory computer-readable storage medium. The computer readable storage medium 800 has a storage space for the program codes 810 used for execution of any steps in the method embodiments. The program codes may be read form or written into one or more computer program products. The program codes 810 may be compressed, for example, in an appropriate form.

The above-described embodiments are merely preferred embodiments of the present disclosure and are not intended to limit the present disclosure. Various changes and modifications can be made to the present disclosure by those skilled in the art. Any modifications, equivalent substitutions and improvements made within the principle of the present disclosure shall fall into the protection scope of the present disclosure.

## Claims

1. A method for controlling a smart home system, wherein the method comprises:
acquiring device information of a smart device waiting to be added in a smart scene;
acquiring, according to the device information, a previous device required to be replaced and at least one smart scene in which the previous device has been added; and
configuring the smart device in the at least one smart scene and removing the previous device from the at least one smart scene.

2. The method as claimed in claim 1, wherein the acquiring, according to the device information, a previous device required to be replaced and at least one smart scene in which the previous device has been added comprises:
displaying replacement confirmation information of the smart device according to the device information, the replacement confirmation information comprising information of at least one previous device capable to be replaced by the smart device;
determining the previous device required to be replaced, in response to a confirmation operation by a user; and
determining the at least one smart scene in which the previous device has been added, according to the previous device required to be replaced.

3. The method as claimed in claim 1, wherein the acquiring, according to the device information, a previous device required to be replaced by the smart device and at least one smart scene in which the previous device has been added comprises:
displaying replacement confirmation information of the smart device according to the device information, the replacement confirmation information comprising information of at least one previous device capable to be replaced and the at least one smart scene comprising information of the previous device; and
determining the previous device required to be replaced and the at least one smart scene in which the previous device has been added, in response to a confirmation operation by a user.

4. The method as claimed in claim 2 or claim 3, wherein the at least one smart scene comprises a plurality of smart scenes each of which comprises the information of the previous device.

5. The method as claimed in any one of claims 1-3, wherein the acquiring device information of a smart device waiting to be added in a smart scene comprises:
detecting a device add operation from a smart scene setting interface by a user; acquiring a device operated by the device add operation in response to detecting the device add operation by the user; taking the device as the smart device waiting to be added in the smart scene; and acquiring the device information of the smart device.

6. The method as claimed in any one of claims 1-3, wherein the configuring the smart device in the at least one smart scene and removing the previous device from the at least one smart scene comprises:
disconnecting the previous device from other devices in the at least one smart scene and deleting device information of the previous device; and
adding the device information of the smart device in the at least one smart scene, and establishing a connection between the smart device and the other devices in the at least one smart scene.

7. The method as claimed in claim 1, wherein the acquiring, according to the device information, a previous device required to be replaced comprises:
acquiring matching degrees between the smart device and other devices in the smart scene, according to the device information of the smart device; and
determining at least one device whose matching degree meets a predetermined condition as at least one previous device capable to be replaced.

8. The method as claimed in claim 7, wherein the determining at least one device whose matching degree meets a predetermined condition as the at least one previous device capable to be replaced comprises:
determining the predetermined condition is met when at least part of device information of one of the other devices in the smart scene is the same as at least part of the device information of the smart device.

9. The method as claimed in claim 7 or claim 8, wherein the determining at least one device whose matching degree meets a predetermined condition as the at least one previous device capable to be replaced comprises:
determining the predetermined condition is met when a device type of one of the other devices in the smart scene is the same as a device type of the smart device.

10. The method as claimed in claim 7 or claim 8, wherein the determining at least one device whose matching degree meets a predetermined condition as the at least one previous device capable to be replaced comprises:
determining the predetermined condition is met when a device type and a device model of one of the other devices in the smart scene is respectively the same as a device type and a device model of the smart device.

11. The method as claimed in claim 1, wherein the acquiring, according to the device information, a previous device required to be replaced comprises:
acquiring a list including one or more failed devices; and
querying the list according to the device information, and determining at least one of the failed devices matching the device information of the smart device as at least one previous device capable to be replaced.

12. The method as claimed in claim 1, wherein the acquiring device information of a smart device waiting to be added in a smart scene comprises:
invoking a quick app corresponding to the smart device, and sending a query request to a server corresponding to the quick app; and
receiving a message from the server, and acquiring the device information of the smart device.

13. The method as claimed in claim 12, wherein before the invoking a quick app corresponding of the smart device, the method further comprises:
configuring a network for the smart device waiting to be added in the smart scene, in response to a network configuration operation for the smart device waiting to be added in the smart scene by a user.

14. The method as claimed in claim 1, wherein the acquiring device information of a smart device waiting to be added in a smart scene comprises:
acquiring identification information of the smart device waiting to be added in the smart scene, and identifying the device information of the smart device from the identification information.

15. The method as claimed in claim 1, wherein after the configuring the smart device in the at least one smart scene and removing the previous device from the at least one smart scene, the method further comprises:
displaying a prompt message, the prompt message being configured to remind a user that an operation has been completed.

16. The method as claimed in claim 1, wherein after the configuring the smart device in the at least one smart scene and removing the previous device from the at least one smart scene, the method further comprises:
displaying a detection interface of the at least one smart scene after replacing.

17. The method as claimed in claim 16, wherein the method further comprises:
activating the at least one smart scene after replacing, in response to a user's operation performed on the detection interface.

18. An apparatus for controlling a smart home system, comprising:
a first acquiring module, configured to acquire device information of a smart device waiting to be added in a smart scene;
a second acquiring module, configured to acquire a previous device required to be replaced and at least one smart scene in which the previous device has been added; and
a performing module, configured to configure the smart device in the at least one smart scene and removing the previous device from the at least one smart scene.

19. An electronic device, comprising a memory and a processor being coupling to the memory; wherein the memory stores instructions which, when being executed by the processor, cause the processor to implement steps comprising:
acquiring device information of a smart device waiting to be added in a smart scene;
acquiring, according to the device information, a previous device required to be replaced and at least one smart scene in which the previous device has been added; and
configuring the smart device in the at least one smart scene and removing the previous device from the at least one smart scene.

20. A computer readable storage medium, wherein the computer readable storage medium stores program codes therein, the program codes are configured to perform the method of any one of claims 1-17 when being executed by a processor.
